# EUROPEAN PATENT APPLICATION

(11) **EP 4 064 414 A2**
(43) Date of publication of application: **28.09.2022**
(21) Application number: 22161180.9
(22) Date of filing: 09.03.2022
(51) Int. Cl.: H01M 10/44

(54) **METHOD FOR INCREASING BATTERY LIFE, ELECTRIC DEVICE, AND STORAGE MEDIUM**

(30) Priority: 23.03.2021 CN 202110308171
(71) Applicant: Ningde Amperex Technology Ltd., Ningde City, Fujian 352100 (CN); DONGGUAN POWERAMP TECHNOLOGY LIMITED, Dongguan City, Guangdong Province 523000 (CN)
(72) Inventor: HAN, Xianglong, Ningde City, Fujian Province, 352100 (CN)
(74) Representative: Icosa

(57) **Abstract**

A method for increasing a battery life is applied to the electric device. The electric device includes a battery. The battery includes a plurality of cells. The method includes: discharging the battery at a current of I₀ when the electric device has been in a static standing state for a first preset period tl and a voltage V1 of any one of the plurality of cells is within a first preset voltage range; and stopping discharging the battery when the electric device is in a non-static-standing state or an acquired voltage V2 of any one of the plurality of cells is less than or equal to any voltage value in a second preset voltage range, where V1 > V2, and 0.02 V ≤ V1 - V2 ≤ 1.1 V.

## Description

### TECHNICAL FIELD

This application relates to the technical field of batteries, and in particular, to a method for increasing a battery life, an electric device, and a storage medium.

### BACKGROUND

By virtue of cost-effectiveness, high safety, excellent low-temperature performance, and a high voltage plateau, lithium manganese oxide is a material suitable for use in the market of electric devices (such as two-wheel and three-wheel electric vehicles). In recent years, the lithium manganese oxide is increasingly widely used in the lithium battery sector. A manganese-based multicomponent composite system is a mainstream technology adopted by batteries of the electric devices, and also meets some of the market demand in the fields of passenger vehicles and commercial electric vehicles. Currently, all batteries that adopt different lithium manganese oxide (LMO) material systems incur a capacity loss after a period of storage, thereby decreasing the service life of the batteries.

### SUMMARY

In view of the fact above, it is necessary to provide a method for increasing a battery life, an electric device, and a storage medium to increase the battery life.

An embodiment of this application provides a method for increasing a battery life. The method is applied to the electric device. The electric device includes a battery. The battery includes a plurality of cells. The method includes: discharging the battery at a current of I₀ when the electric device has been in a static standing state for a first preset period t1 and a voltage V1 of any one of the plurality of cells is within a first preset voltage range; and stopping discharging the battery when the electric device is in a non-static-standing state or an acquired voltage V2 of any one of the plurality of cells is less than or equal to any voltage value in a second preset voltage range, where V1 > V2, and 0.02 V ≤ V1 - V2 ≤ 1.1 V.

According to some embodiments of this application, 0.2 V ≤ V1 - V2 ≤ 1.0 V.

According to some embodiments of this application, the first preset voltage range is: 3.1 V ≤ the first preset voltage ≤ 3.9 V; and the second preset voltage range is: 2.8 V ≤ the second preset voltage < 3.1 V.

According to some embodiments of this application, 0 < t1 ≤ 8 days.

According to some embodiments of this application, the method further includes: discharging the battery at a current of I₀ when the electric device has been in the static standing state for a second preset period t2 and a voltage V3 of any one of the plurality of cells is within a third preset voltage range; and stopping discharging the battery when the electric device is in the non-static-standing state or an acquired voltage V4 of any one of the plurality of cells is less than or equal to any voltage value in the second preset voltage range, where V3 > V4, and 0.8 V ≤ V3 - V4 ≤ 1.5 V.

According to some embodiments of this application, 1.0 V ≤ V3 - V4 ≤ 1.3 V.

According to some embodiments of this application, the third preset voltage range is: 3.9 V < the third preset voltage ≤ 4.1 V.

According to some embodiments of this application, 8 days ≤ t2 ≤ 365 days.

According to some embodiments of this application, the current I₀ is greater than 0 mA and less than or equal to 500 mA.

According to some embodiments of this application, the current I₀ is greater than or equal to 10 mA and less than or equal to 300 mA.

According to some embodiments of this application, the current I₀ is greater than or equal to 20 mA and less than or equal to 200 mA.

According to some embodiments of this application, the battery includes a positive electrode plate. The positive electrode plate includes a positive current collector and a positive active material layer coated on the positive current collector. The positive active material layer includes a positive active material. The positive active material includes a mixture of lithium manganese oxide and LiMO, and a chemical formula of the LiMO is: LiₓCo_{y}Ni_{z}M_{1-y-z}O_{b-a}X_{b}, 0.8 < x ≤ 1.2, 0 ≤ y ≤ 0.5, 0.5 ≤ z ≤ 1.0, 1.8 ≤ b ≤ 2.2, and 0 ≤ a ≤ 1.0.

An embodiment of this application provides an electric device. The electric device includes: a battery and a processor. The battery is configured to supply power to the electric device, and the battery includes a plurality of cells. The processor is configured to perform the foregoing method for increasing a battery life.

An embodiment of this application provides a storage medium on which at least one computer instruction is stored. The computer instruction is loaded by a processor and used to perform the foregoing method for increasing a battery life.

The method for increasing a battery life according to this embodiment of this application is intended for use in a battery system that is an LMO material system or a hybrid system containing an LMO material. When a BMS detects that the voltage of any cell in the battery is within the first preset voltage range and that the battery has been in a static standing state for a specified period, a self-discharge policy is enabled. The self-discharge policy is disabled when it is detected that the voltage is less than or equal to any voltage value in the second preset voltage range. With respect to the capacity loss incurred by a battery containing an LMO material or an LMO mixture material after the battery is stored for a period, this application systematically reduces, by using the self-discharge policy of the BMS, the probability of capacity loss of the battery stored at a specific voltage, thereby increasing the service life of the battery without changing the overall design of the cell or increasing any cost.

### BRIEF DESCRIPTION OF DRAWINGS

FIG. 1 is a schematic diagram of an electric device according to an embodiment of this application;
FIG. 2 is a flowchart of a method for increasing a battery life according to an embodiment of this application;
FIG. 3 is a flowchart of a method for increasing a battery life according to another embodiment of this application;
FIG. 4 is a life expectancy chart of a battery that is prepared according to Embodiment 1 and that adopts a method for increasing a battery life according to this application;
FIG. 5 is a life expectancy chart of a battery that is prepared according to Embodiment 2 and that adopts a method for increasing a battery life according to this application;
FIG. 6 is a life expectancy chart of a battery that is prepared according to Embodiment 3 and that adopts a method for increasing a battery life according to this application; and
FIG. 7 is a life expectancy chart of a battery that is prepared according to Embodiment 4 and that adopts a method for increasing a battery life according to this application.

Reference numerals of main components:

| | |
|---|---|
| Electric device | 100 |
| Memory | 11 |
| Processor | 12 |
| Battery | 13 |
| Cell | 130 |
| Acquisition device | 14 |
| Timer | 15 |

This application is described in further detail below with reference to specific embodiments and the drawings.

### DETAILED DESCRIPTION

The following describes the technical solutions in the embodiments of this application clearly and thoroughly with reference to the drawings herein. Evidently, the described embodiments are merely a part of but not all of the embodiments of this application.

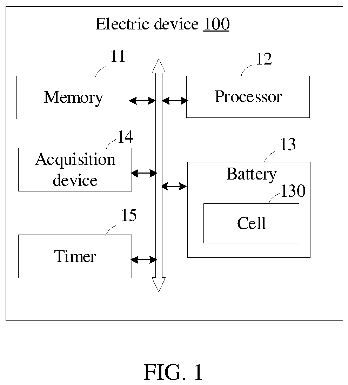

Referring to FIG. 1, FIG. 1 is a schematic diagram of an electric device according to an embodiment of this application. The electric device 100 contains, but without limitation, a memory 11, at least one processor 12, a battery 13, an acquisition device 14, and a timer 15. Such components may be interconnected directly or by a bus.

It needs to be noted that FIG. 1 describes merely an example of the electric device 100. In other embodiments, the electric device 100 may include more or fewer components, or the configuration of the components may be different. The electric device 100 may be an electric tool, an electric motorcycle, an electric bicycle, an electric vehicle, a mobile phone, a tablet computer, a personal digital assistant, a personal computer, or any other rechargeable devices as appropriate.

In an embodiment, the battery 13 is a rechargeable battery configured to provide electrical energy to the electric device 100. For example, the battery 13 may be a lead-acid battery, a nickel-cadmium battery, a nickel-hydrogen battery, a lithium-ion battery, a lithium polymer battery, a lithium iron phosphate battery, or the like. The battery 13 is logically connected to the processor 12 through a battery management system (BMS), so that functions such as charging and discharging are implemented through the battery management system. The battery management system may be communicationally connected to a power conversion system (PCS) through controller area network (CAN) or RS485. The battery 13 includes a plurality of cells 130 (only one cell is shown in the drawing). The battery may be repeatedly charged in a rechargeable manner.

In this embodiment, the battery 13 includes a positive electrode plate, a negative electrode plate, a separator, and an electrolytic solution. The positive electrode plate includes a positive current collector and a positive active material layer coated on the positive current collector. The positive active material layer includes a positive active material, a binder, and a conductive agent. The positive active material includes a mixture of lithium manganese oxide (Li₂MnO₄) and LiMO, and a chemical formula of the LiMO is: LiₓCo_{y}Ni_{z}M_{1-y-z}O_{b-a}X_{b}. In the chemical formula, M is at least one selected from boron (B), magnesium (Mg), aluminum (Al), silicon (Si), phosphorus (P), sulfur (S), titanium (Ti), chromium (Cr), manganese (Mn), iron (Fe), copper (Cu), zinc (Zn), gallium (Ga), germanium (Ge), yttrium (Y), zirconium (Zr), molybdenum (Mo), silver (Ag), barium (Ba), tungsten (W), indium (In), tin (Sn), lead (Pb), or antimony (Sb). In some embodiments, the value ranges of x, y, z, a, and b are: 0.8 < x ≤ 1.2, 0 ≤ y ≤ 0.5, 0.5 ≤ z ≤ 1.0, 0 ≤ a ≤ 1.0, and 1.8 ≤ b ≤ 2.2, respectively.

In this embodiment, the negative electrode plate includes a negative current collector and a negative active material layer coated on the negative current collector. The negative active material layer includes a negative active material and a binder. The negative active material is a carbon material or non-carbon material. The carbon material may be natural graphite, artificial graphite, or the like. The non-carbon material may be one of or any combination of transition metal (Sn/Sb), spinel (Li₄Ti₅O₁₂, LTO), tin-based compound, or silicon-based compound. It needs to be noted that, in the description of the following embodiments, a carbon material is used as the negative active material.

In this embodiment, the electrolytic solution includes a solvent and a lithium salt. The solvent includes one of dimethyl carbonate (DMC), diethyl carbonate (DEC), ethyl methyl carbonate (EMC), ethyl propyl carbonate (EPC), ethyl butyl carbonate (EBC), Dipropyl carbonate (DPC), ethylene carbonate (EC), propylene carbonate (PC), butylene carbonate (2,3-Butylene carbonate, BC), γ-butyrolactone (γ-BL), vinylene carbonate (VC), or propylene sulfite (PS), or any combination thereof at any mass ratio; and the lithium salt includes one of lithium hexafluorophosphate (LiPF₆), lithium tetrafluoroborate (LiBF4), lithium hexafluoroarsenate (LiAsF₆), lithium perchlorate (LiClO₄), or lithium trifluoromethanesulfonate (CF₃SO₃Li), or any combination thereof at any mass ratio.

In this embodiment, the acquisition device 14 is configured to acquire a voltage of the battery 13 and a charge current of the battery 13. In this embodiment, the acquisition device 14 is configured to acquire the voltage of a cell of the battery 13. In this embodiment, the acquisition device 14 is an analog-to-digital converter. Understandably, the acquisition device 14 may be another voltage acquisition device or current acquisition device instead. The timer 15 is configured to record a period in which that the cell 130 of the battery 13 is in a static standing state. Understandably, the electric device 100 may further include other devices, such as a pressure sensor, a light sensor, a gyroscope, a hygrometer, an infrared sensor, and the like.

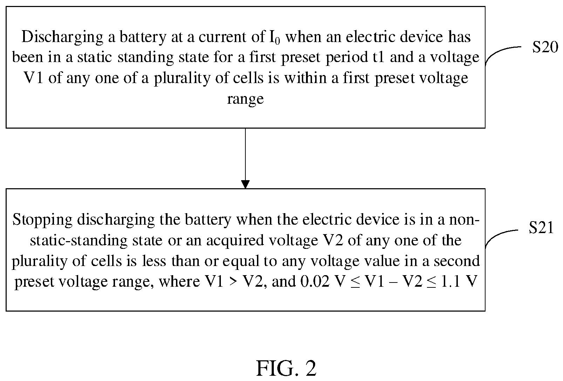

Referring to FIG. 2, FIG. 2 is a flowchart of a method for increasing a battery life according to an embodiment of this application. The method for increasing a battery life is applied to a battery of an electric device. The method for increasing a battery life includes the following steps.

Step S20: Discharging a battery at a current of I₀ when an electric device has been in a static standing state for a first preset period t1 and a voltage V1 of any one of a plurality of cells is within a first preset voltage range.

In this embodiment, for a battery that uses an LMO system as a positive electrode chemical system, the LMO system incurs a problem of Mn dissolution during storage (under a high temperature/normal temperature). The Mn dissolution leads to rupture of an SEI (solid electrolyte interphase) film of a negative electrode of the battery and deposition at the negative electrode, and is prone to cause capacity loss of the battery. For example, when the voltage of any one of the plurality of cells 130 in the battery 13 reaches a preset voltage (for example, 3.9 V) and the electric device 100 has been in a static standing state for a first preset period t1, the structure of the battery 13 may become unstable, thereby resulting in capacity loss of the battery 13 and decreasing the life of the battery 13 rapidly. To avoid the capacity loss of the battery 13, this application discharges the cell 130 of the battery 13 through a self-discharge policy of a BMS without changing the chemical system of the battery 13, so as to reduce the probability of capacity loss of the battery 13 stored at a preset voltage, increase the service life of the cell 130, and increasing the life of the battery 13.

In this embodiment, the operating status of the electric device 100 may be automatically monitored by the BMS. When detecting that the electric device 100 is in a static standing state, the BMS controls the timer 15 to record the first preset period in which the electric device 100 has been in the static standing state. The BMS also controls the acquisition device 14 to acquire the voltage of each cell 130 among the plurality of cells 130 to obtain a plurality of voltage values. When the BMS determines that any one of the plurality of voltage values is within the first preset voltage range, the BMS controls the battery 13 to start discharging at a discharge current of I₀.

In this embodiment, the first preset period is less than or equal to 8 days. That is, the first preset period t1 satisfies 0 d < t1 ≤ 8 d.

In this embodiment, the first preset voltage range is: 3.1 V ≤ the first preset voltage ≤ 3.9 V.

In this embodiment, the current I₀ is greater than 0 mA and less than or equal to 500 mA. In other embodiments, the current I₀ is greater than or equal to 10 mA and less than or equal to 300 mA. In still other embodiments, the current I₀ is greater than or equal to 20 mA and less than or equal to 200 mA.

It needs to be noted that the electric device 100 being in a static standing state means that the battery 13 is in a static standing state, in which the battery 13 is being neither charged nor discharged.

Step S21: Stopping discharging the battery 13 when the electric device 100 is in a non-static-standing state or a voltage V2 of any one of the plurality of cells 130 is less than or equal to any voltage value in a second preset voltage range, where V1 > V2, and 0.02 V ≤ V1 - V2 ≤ 1.1 V.

In other embodiments, 0.2 V ≤ V1 - V2 ≤ 1.0 V.

In this embodiment, in order to prevent the battery 13 from being adversely affected by full discharge of the battery 13, the discharge of the battery 13 is stopped when the electric device 100 is in a non-static-standing state or the voltage V2 of any one of the plurality of cells 130 satisfies a preset condition. Specifically, the BMS keeps monitoring the operating status of the electric device 100, and controls the acquisition device 14 to keep acquiring the voltage of each cell 130 among the plurality of cells 130, so as to obtain a plurality of voltage values. The discharge of the battery 13 is stopped if the electric device 100 is in a non-static-standing state. The non-static-standing state includes a charging state and a moving state of the electric device 100. The discharge of the battery 13 is stopped if any voltage value V2 among the plurality of voltage values is less than or equal to any voltage value in the second preset voltage range.

In this embodiment, the second preset voltage range is: 2.8 V ≤ the second preset voltage ≤ 3.1 V.

It needs to be noted that the voltage V2 of the cell 130 after the self discharge of the battery 13 and the voltage V1 of the cell 130 before the self discharge of the battery 13 satisfy: V1 > V2, and 0.02 V ≤ V1 - V2 ≤ 1.1 V.

In other embodiments, after step S21, the BMS keeps monitoring the operating status of the electric device, and resumes steps S20 and S21 when the electric device enters a static standing state.

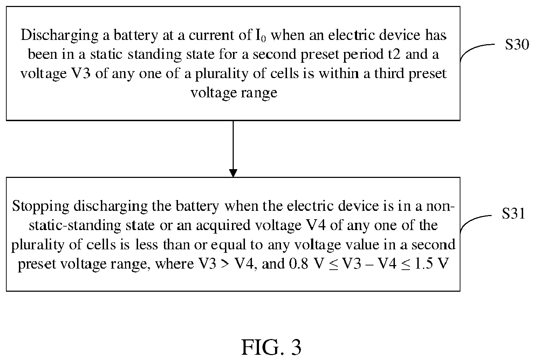

Referring to FIG. 3, FIG. 3 is a flowchart of a method for increasing a battery life according to another embodiment of this application. The method for increasing a battery life is applied to a battery of an electric device. The method for increasing a battery life includes the following steps.

Step S30: Discharging a battery 13 at a current of I₀ when an electric device 100 has been in a static standing state for a second preset period t2 and a voltage V3 of any one of a plurality of cells 130 is within a third preset voltage range.

In this embodiment, the BMS keeps monitoring the operating status of the electric device 100, and controls the acquisition device 14 to keep acquiring the voltage of each cell 130 among the plurality of cells 130. When the voltage of any one of the plurality of cells 130 in the battery 13 is greater than the preset voltage (for example, 3.9 V), it is possible that the battery 13 is not in an unstable state. The battery 13 does not need to be self-discharged at this time. However, if it is detected that the electric device 100 has been in a static standing state for a second preset period t2 and the voltage V3 of any one of the plurality of cells 130 is within a third preset voltage range, the BMS enables a self-discharge policy for the battery. Therefore, the BMS controls the battery 13 to perform self discharge at a current of I₀.

In this embodiment, the third preset voltage range is: 3.9 V < the third preset voltage ≤ 4.1 V.

Step S31: Stopping discharging the battery 13 when the electric device 100 is in a non-static-standing state or a voltage V4 of any one of the plurality of cells 130 is less than or equal to any voltage value in the second preset voltage range, where V3 > V4, and 0.8 V ≤ V3 - V4 ≤ 1.5 V.

In other embodiments, 1.0 V ≤ V3 - V4 ≤ 1.3 V.

Similarly, in order to prevent the battery 13 from being fully discharged, it is necessary to stop discharge of the battery 13 after the battery 13 is self-discharged. Specifically, the BMS keeps monitoring the operating status of the electric device 100, and controls the acquisition device 14 to keep acquiring the voltage of each cell 130 among the plurality of cells 130, so as to obtain a plurality of voltage values. The discharge of the battery 13 is stopped if the electric device 100 is in a non-static-standing state. Alternatively, the discharge of the battery 13 is stopped if an acquired voltage V4 of any one of the plurality of cells 130 is less than or equal to any voltage value in the second preset voltage range.

It needs to be noted that the voltage V4 of the cell 130 after the self discharge of the battery 13 and the voltage V3 of the cell 130 before the self discharge of the battery 13 satisfy: V3 > V4, and 0.8 V ≤ V3 - V4 ≤ 1.5 V.

In other embodiments, after step S31, the BMS keeps monitoring the operating status of the electric device, and resumes steps S30 and S31 when the electric device enters a static standing state.

To make the objectives, technical solutions, and advantages of this application clearer, the following describes in more detail the method for increasing a battery life according to this application with reference to drawings and embodiments. Understandably, the specific embodiments described herein are merely intended to explain this application, but not to limit this application.

### Embodiment 1

Preparing a positive electrode plate, a negative electrode plate, a separator, and an electrolytic solution of a battery 13 as well as a cell 130 by performing the following methods.

### 1. Preparing a positive electrode plate

Dissolving lithium nickel cobalt manganese oxide, lithium manganese oxide, conductive carbon black, carbon nanotubes, and polyvinylidene difluoride at a mass ratio of 9.6: 86.4: 0.8: 0.8: 2.4 in an N-methyl-pyrrolidone solution to form a positive slurry. Using an aluminum foil as a positive current collector (16 µm in thickness), coating the positive current collector with the positive slurry, and performing steps such as drying, cold pressing, and cutting to obtain a positive electrode plate.

### 2. Preparing a negative electrode plate

Dissolving artificial graphite, styrene butadiene rubber, and sodium carboxymethyl cellulose at a mass ratio of 97.7: 1.0: 1.3 in deionized water to form a negative slurry. Using a copper foil as a negative current collector, coating the negative current collector with the negative slurry, and performing steps such as drying, cold pressing, and cutting to obtain a negative electrode plate.

### 3. Preparing an electrolytic solution

Blending lithium hexafluorophosphate with a nonaqueous organic solvent at a mass ratio of 10: 90 in an environment with a water content of less than 10 ppm to form an electrolytic solution. The nonaqueous organic solvent is made by blending ethylene carbonate (EC), diethyl carbonate (DEC), propylene carbonate (PC), propyl propionate (PP), and vinylene carbonate (VC) at a mass ratio of 20: 30: 20: 28: 2.

### 4. Preparing a separator

Using single-layer polypropylene (PP) as a separator.

### 5. Preparing a cell

Stacking the negative electrode plate, the positive electrode plate, and the separator sequentially so that the separator is located between the positive electrode plate and the negative electrode plate to serve an isolation purpose, and then winding the plates into an electrode assembly; Then putting the electrode assembly into an aluminum plastic film packaging bag, and performing drying at 80 °C to obtain a dry electrode assembly. Subsequently, injecting the electrolytic solution into the dry electrode assembly, and performing steps such as vacuum sealing, static standing, chemical formation, and shaping to make a cell.

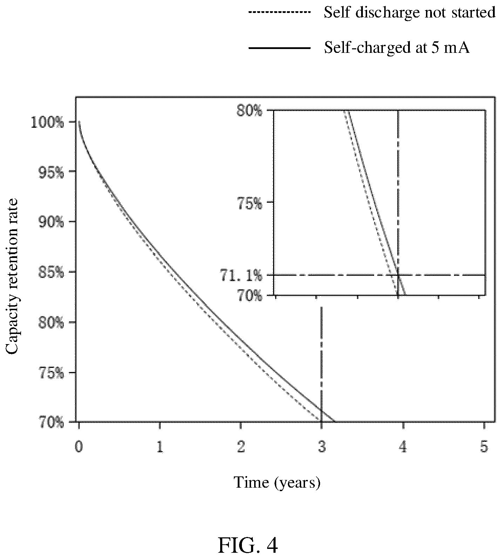

A specific process of applying the method for increasing a battery life of the battery 13 according to an embodiment of this application includes: The BMS automatically monitors the operating status of the electric device 100; if it is detected that the electric device 100 is in a static standing state (that is, not moving or being charged), the BMS controls the timer 15 to record the first preset period in which the electric device 100 has been in the static standing state; if the first preset period is greater than or equal to zero and an acquired voltage of a cell among the plurality of cells 130 is 3.88 V, the BMS controls the battery 13 to start discharging at a current of 5 mA; and the BMS keeps monitoring the period in which the electric device 100 has been in the static standing state and monitoring the voltage of the cell, and stops the self discharge if the voltage of any cell 130 is greater than or equal to 3.1 V. In this way, a battery life curve of the battery 13 that adopts the method for increasing a battery life of the battery 13 according to this embodiment of this application can be obtained, as shown in FIG. 4. Compared with the battery life curve of the battery 13 that does not adopt the method for increasing a battery life of the battery 13 according to the embodiment of this application, the method according to the embodiment of this application can increase the life of the battery 13 by 6% when the life of the battery 13 declines to 70% after the battery 13 is self-discharged at a current of 5 mA. Specifically, after the battery 13 is self-discharged at a current of 5 mA (I₀), it takes 3.18 years to decline the life of the battery 13 to 70%, but it takes 3 years to decline the life of the battery 13 to 70% on condition that the self discharge is not started. Therefore, the method according to the embodiment of this application can increase the life of the battery 13 by (3.18 - 3.0)/3.0 = 6%.

### Embodiment 2

Preparing a positive electrode plate, a negative electrode plate, a separator, and an electrolytic solution of a battery 13 as well as a cell 130 by performing the following methods.

### 1. Preparing a positive electrode plate

Mixing a nickel-cobalt-manganese ternary material, lithium iron phosphate, lithium manganese oxide, conductive carbon black, carbon nanotubes, polyvinylidene difluoride at a mass ratio of 28.8: 28.8: 38.4: 0.8: 0.6: 2.4 (the mass ratio between the nickel-cobalt-manganese ternary material, the lithium iron phosphate, and the lithium manganese oxide is 3: 3: 4). The preparation process is the same as that in Embodiment 1.

### 2. Preparing a negative electrode plate

Mixing artificial graphite, silicon, styrene butadiene rubber, and sodium carboxymethyl cellulose at a mass ratio of 92.8: 4.9: 1.0: 1.3 (the mass ratio between the artificial graphite and silicon is 95: 5). The preparation process is the same as that in Embodiment 1.

### 3. The preparation process of the electrolytic solution is the same as that in Embodiment 1.

### 4. Preparing a separator

Using single-layer polyethylene (PE) as a separator, with a single side coated with ceramic.

### 5. The preparation process of a cell is the same as that in Embodiment 1.

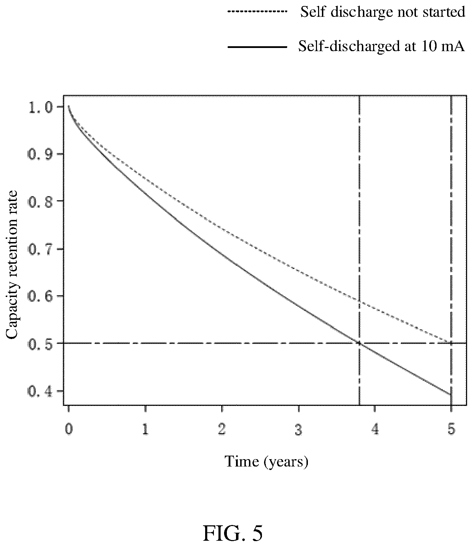

A specific process of applying the method for increasing a battery life of the battery 13 according to an embodiment of this application is the same as that in Embodiment 1. In the process, the BMS controls the battery 13 to start discharging at a current of 10 mA if the record shows that the electric device 100 has been in the static standing state for 90 days (that is, the second preset period) and an acquired voltage of a cell among the plurality of cells 130 is 3.95 V; and the BMS keeps monitoring the period in which the electric device 100 has been in the static standing state and monitoring the voltage of the cell, and stops the self discharge if the voltage of any cell 130 is greater than or equal to 3.1 V. In this way, the battery life comparison chart can be obtained, as shown in FIG. 5. Specifically, after the battery 13 is self-discharged at a current of 10 mA (I₀), it takes 3.69 years to decline the life of the battery 13 to 50%, but it takes 4.99 years to decline the life of the battery 13 to 50% on condition that the self discharge is not started. Therefore, the method according to the embodiment of this application can increase the life of the battery 13 by (4.99 - 3.69)/3.69 = 35%.

### Embodiment 3

Preparing a positive electrode plate, a negative electrode plate, a separator, and an electrolytic solution of a battery 13 as well as a cell 130 by performing the following methods.

1. The preparation process of the positive electrode plate can be learned by referring to Embodiment 1. In the process, the mass ratio between lithium iron phosphate, lithium manganese oxide, conductive carbon black, carbon nanotubes, and polyvinylidene difluoride as ingredients of the positive slurry is 29.0: 68.0: 0.8: 0.8: 1.4, and a thickness of the aluminum foil as the positive current collector is 10 µm.

2. The preparation process of the negative electrode plate can be learned by referring to Embodiment 1, in which the mass ratio between natural graphite, artificial graphite, styrene butadiene rubber, and sodium carboxymethyl cellulose as ingredients of the negative slurry is 30: 67.7: 1.0: 1.3.

3. The preparation process of the electrolytic solution is the same as that in Embodiment 1, in which the mass ratio between lithium hexafluorophosphate and nonaqueous organic solvent as ingredients of the electrolytic solution is 9: 91.

### 4. Preparing a separator

Using a three-layer polypropylene-polyethylene-polypropylene composite film as a separator, with a single side coated with ceramic.

5. The preparation process of a cell is the same as that in Embodiment 1.

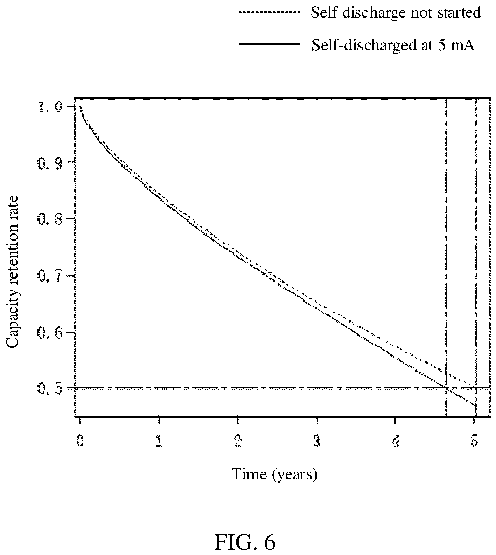

A specific process of applying the method for increasing a battery life of the battery 13 according to an embodiment of this application is the same as that in Embodiment 1. In the process, the BMS controls the battery 13 to start discharging at a current of 5 mA if the record shows that the electric device 100 has been in the static standing state for 15 days (that is, the second preset period) and an acquired voltage of a cell among the plurality of cells 130 is less than or equal to 3.95 V; and the BMS keeps monitoring the period in which the electric device 100 has been in the static standing state and monitoring the voltage of the cell, and stops the self discharge if the voltage of any cell 130 is greater than or equal to 3.75 V. In this way, the battery life comparison chart can be obtained, as shown in FIG. 6. Specifically, after the battery 13 is self-discharged at a current of 5 mA (I₀), it takes 4.66 years to decline the life of the battery 13 to 50%, but it takes 5.01 years to decline the life of the battery 13 to 50% on condition that the self discharge is not started. Therefore, the method according to the embodiment of this application can increase the life of the battery 13 by (5.01 - 4.66)/4.66 = 7.5%.

### Embodiment 4

Preparing a positive electrode plate, a negative electrode plate, a separator, and an electrolytic solution of a battery 13 as well as a cell 130 by performing the following methods.

1. Preparing a positive electrode plate Dissolving lithium nickel cobalt manganese oxide, lithium manganese oxide, conductive carbon black, carbon nanotubes, and polyvinylidene difluoride at a mass ratio of 19.2: 76.8: 0.8: 0.6: 2.4 in an N-methyl-pyrrolidone solution to form a positive slurry. The preparation process is the same as that in Embodiment 2.

2. The preparation process of the negative electrode plate is the same as that in Embodiment 1.

3. The preparation process of the electrolytic solution is the same as that in Embodiment 1.

4. Preparing a separator

Using a three-layer polypropylene-polyethylene-polypropylene composite film as a separator, with a single side coated with ceramic.

5. The preparation process of a cell is the same as that in Embodiment 1.

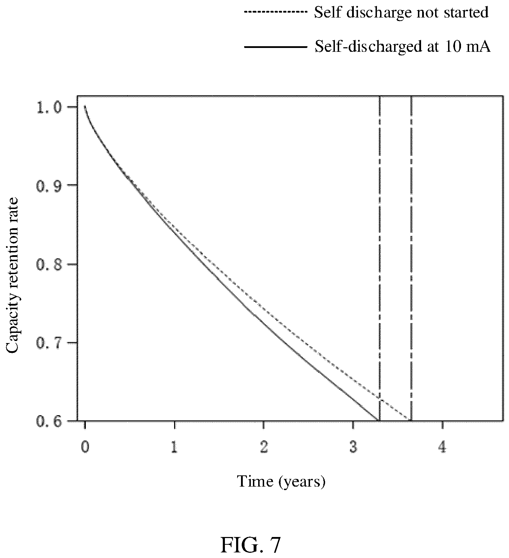

A specific process of applying the method for increasing a battery life of the battery 13 according to an embodiment of this application is the same as that in Embodiment 1. In the process, the BMS controls the battery 13 to start discharging at a current of 10 mA if the record shows that the electric device 100 has been in the static standing state for 6 days (that is, the first preset period) and an acquired voltage of a cell among the plurality of cells 130 is less than or equal to 3.79 V; and the BMS keeps monitoring the period in which the electric device 100 has been in the static standing state and monitoring the voltage of the cell, and stops the self discharge if the voltage of any cell 130 is greater than or equal to 3.1 V. In this way, the battery life comparison chart can be obtained, as shown in FIG. 7. Specifically, after the battery 13 is self-discharged at a current of 10 mA (I₀), it takes 3.306 years to decline the life of the battery 13 to 60%, but it takes 3.68 years to decline the life of the battery 13 to 60% on condition that the self discharge is not started. Therefore, the method according to the embodiment of this application can increase the life of the battery 13 by (3.68 - 3.306)/3.306 = 11.3%.

Still referring to FIG. 1, in this embodiment, the memory 11 may be an internal memory of the electric device 100, that is, a memory built in the electric device 100. In other embodiments, the memory 11 may be an external memory of the electric device 100, that is, a memory externally connected to the electric device 100.

In some embodiments, the memory 11 is configured to store program code and various data, and access the programs and data automatically at a high speed during operation of the electric device 100.

The memory 11 may include a random access memory, and may further include a non-volatile memory, such as a hard disk, an internal memory, a plug-in hard disk, a smart media card (SMC), a secure digital (SD) card, a flash card, at least one disk storage device, a flash memory device, or other volatile solid-state storage devices.

In an embodiment, the processor 12 may be a central processing unit (CPU), or may be another general-purpose processor, a digital signal processor (DSP), an application-specific integrated circuit (ASIC), a field programmable gate array (FPGA), or another programmable logical device, a discrete gate, or a transistor logical device, a discrete hardware component, or the like. The general-purpose processor may be a microprocessor, or the processor may be any other conventional processor or the like.

The program code and various data in the memory 11, when implemented in the form of a software functional unit and sold or used as an independent product, may be stored in a computer-readable storage medium. Based on such an understanding, all or part of the processes of the method described in the foregoing embodiments, for example, the steps of the method for increasing a battery life according to this application, may be performed by relevant hardware instructed by a computer program. The computer program may be stored in a computer-readable storage medium. When executed by a processor, the computer program can perform the steps in each method embodiment described above. The computer program includes computer program code. The computer program code may be in the form of source code, object code, an executable file, or some intermediate forms, or the like. The computer-readable medium may include any entity or device capable of carrying the computer program code, record medium, USB disk, mobile hard disk, magnetic disk, optical disk, computer memory, read-only memory (ROM), and the like.

Understandably, the division into the modules is a logical function division, and may be in other division forms in actual implementation. In addition, function modules in each embodiment of this application may be integrated into one processing unit, or each module may exist physically alone, or two or more modules may be integrated into one unit. The integrated module may be implemented in form of hardware, or may be implemented in form of hardware plus a software function module.

Finally, it needs to be noted that the foregoing embodiments are merely intended for describing the technical solutions of this application but not intended as a limitation. Although this application is described in detail with reference to the foregoing optional embodiments, a person of ordinary skill in the art understands that modifications or equivalent replacements may be made to the technical solutions of this application without departing from the spirit and scope of the technical solutions of this application.

## Claims

1. A method for increasing a battery life, applied to an electric device (100), wherein the electric device (100) comprises a battery (13), and the battery (13) comprises a plurality of cells (130), **characterized in that** the method comprises:
discharging the battery (13) at a current of I₀ when the electric device (100) has been in a static standing state for a first preset period t1 and a voltage V1 of any one of the plurality of cells (130) is within a first preset voltage range; and
stopping discharging the battery (13) when the electric device (100) is in a non-static-standing state or an acquired voltage V2 of any one of the plurality of cells (130) is less than or equal to any voltage value in a second preset voltage range, wherein V1 > V2, and 0.02 V ≤ V1 - V2 ≤ 1.1 V.

2. The method for increasing a battery life according to claim 1, **characterized in that**, the first preset voltage range is: 3.1 V ≤ the first preset voltage ≤ 3.9 V; and the second preset voltage range is: 2.8 V ≤ the second preset voltage < 3.1 V.

3. The method for increasing a battery life according to claim 1 or 2, **characterized in that**, 0 day < t1 ≤ 8 days.

4. The method for increasing a battery life according to any one of claims 1 to 3, **characterized in that**, the method further comprises:
discharging the battery (13) at a current of I₀ when the electric device (100) has been in the static standing state for a second preset period t2 and a voltage V3 of any one of the plurality of cells (130) is within a third preset voltage range; and
stopping discharging the battery (13) when the electric device (100) is in the non-static-standing state or an acquired voltage V4 of any one of the plurality of cells (130) is less than or equal to any voltage value in the second preset voltage range, wherein V3 > V4, and 0.8 V ≤ V3 - V4 ≤ 1.5 V.

5. The method for increasing a battery life according to claim 4, **characterized in that**, the third preset voltage range is: 3.9 V < the third preset voltage ≤ 4.1 V.

6. The method for increasing a battery life according to claim 4 or 5, **characterized in that**, 8 days ≤ t2 ≤ 365 days.

7. The method for increasing a battery life according to any one of claims 1 to 6, **characterized in that**, the I₀ is greater than 0 mA and less than or equal to 500 mA.

8. The method for increasing a battery life according to any one of claims 1 to 7, **characterized in that**, the battery (13) comprises a positive electrode plate, the positive electrode plate comprises a positive current collector and a positive active material layer coated on the positive current collector, the positive active material layer comprises a positive active material, the positive active material comprises a mixture of lithium manganese oxide and LiMO, and a chemical formula of the LiMO is: LiₓCo_{y}Ni_{z}M_{1-y-z}O_{b-a}X_{b}, 0.8 < x ≤ 1.2, 0 ≤ y ≤ 0.5, 0.5 ≤ z ≤ 1.0, 1.8 ≤ b ≤ 2.2, and 0 ≤ a ≤ 1.0.

9. An electric device (100), **characterized in that** the electric device (100) comprises:
a battery (13), configured to supply power to the electric device (100), wherein the battery (13) comprises a plurality of cells (130); and
a processor (12), configured to perform the method for increasing a battery life according to any one of claims 1 to 8.

10. A storage medium on which at least one computer instruction is stored, **characterized in that** the instruction is loaded by a processor (12) and used to perform the method for increasing a battery life according to any one of claims 1 to 8.
